# EUROPÄISCHE PATENTSCHRIFT

(11) **EP 0 482 433 B1**
(45) Veröffentlichungstag und Bekanntmachung des Hinweises auf die Patenterteilung: **25.01.1995**
(21) Anmeldenummer: 91117261.7
(22) Anmeldetag: 10.10.1991
(51) Int. Cl.: B27K 3/52

(54) **Polymere Stickstoffverbindungen und Metall fixierende Säuren enthaltende Holzschutzmittel**
Wood preserving agents containing polymeric nitrogen compounds and metal fixing acids
Agents protecteurs du bois contenant des composés d'azote polymères et des acides fixateurs de métaux

(30) Priorität: 20.10.1990 DE 4033419
(43) Veröffentlichungstag der Anmeldung: 29.04.1992
(73) Patentinhaber: Dr. Wolman GmbH, D-76547 Sinzheim (DE)
(72) Erfinder: Goettsche, Reimer, Dr., W-7570 Baden-Baden 19 (DE); Reuther, Wolfgang, Dr., W-6900 Heidelberg (DE)
(74) Vertreter: Langfinger, Klaus-Dieter, Dr.

(56) Entgegenhaltungen:
- EP-A- 0 234 461
- EP-A- 0 270 848
- EP-A- 0 320 786
- EP-A- 0 370 182
- US-A- 4 038 451
- US-A- 4 075 394

## Beschreibung

Die vorliegende Erfindung betrifft wasserlösliche Holzschutzmittel, die eine Metallverbindung, eine das Metall fixierende Säure und polymere, komplexbildende Stickstoffverbindungen und gegebenenfalls wasserlösliche Amine und/oder Polyamine enthalten.

Wasserlösliche Holzschutzmittel auf Basis von Kupfer- und/oder Zinkverbindungen, C₅-C₂₀-Carbonsäuren und aliphatischen Polyaminen sind bekannt (EP 270 848 und 320 786). Als aliphatische Polyamine sind geeignet z.B. Alkylenpolyamine mit 2 bis 4 N-Atomen. Je nach Art der verwendeten Polyamine ergeben sich verschiedene Nachteile.

Es sind ferner Mischungen aus Kupfer-di(N-cyclohexyl-diazeniumdioxy), Polyaminen und komplexbildenden Carbonsäuren (EP-A-02 34 461) und Mischungen aus Hydroxypyridin-N-oxid, Aminverbindungen und einem Kupfersalz bekannt (EP-A-03 70 182).

Bei Verwendung von Polypropylenpoly-aminen, d.h. z.B. 1,3-Diaminopropan, Dipropylentriamin (3,3'-Diaminodipropylamin), Tripropylentetramin ist bei der Imprägnierung von Vollholz in großtechnischen Verfahren, z.B. dem Kesseldruckverfahren, die Eindringtiefe und die Verteilung des Kupfers nicht immer ausreichend, um einen tiefgehenden Holzschutz, z.B. bei Rundhölzern wie Hasten und Palisaden, insbesondere bei Verwendung mit Erdkontakt, d.h. wenn ein Teil des Holzes in der Erde eingegraben ist, zu gewährleisten.

Die alkalischen, wäßrigen Lösungen der Kupfer- und/oder Zinkverbindungen (pH-Wert im Mittel 8-10) reagieren mit den sauren Holzbestandteilen in der Weise, daß das Kupfer und/oder das Zink in Gegenwart der Carbonsäuren bereits in den äußeren Bereichen des Holzes ausfällt, so daß das Kupfer und/oder Zink z.B. in Kiefernholz den Kern des Holzes bei einer Splintdicke von mehr als 2 cm nicht erreicht, insbesondere dann, wenn das Kiefernholz enge Jahresringe und hohe Harzgehalte aufweist.

Außerdem ist die Kupferauswaschung bei Anwendung dieser Holzschutzmittel, insbesondere bei der Anwendung mittels Heißdampffixierung zu hoch. Es können z.B. über 20 % des im Holz befindlichen Kupfers nach Heißdampffixierung (Heißdampf ca. 100°C, 1-2 Stunden) ausgewaschen werden.

Bei Verwendung von Polyethylenpolyaminen, z.B. Ethylendiamin, Diethylentriamin, Triethylentetramin; Aminoethylethanolamin (2-(2-Aminoethyl)-amino)ethanol ; 1, 2-Propandiamin ist zwar ein verbessertes Eindringvermögen gewährleistet, die Fixierung des Holzschutzmittels reicht dagegen sowohl bei Normalfixierung als auch bei Schnellfixierung nicht aus. Die Kupferauswaschung aus dem Holz liegt beispielsweise über 25 %.

Es wurde nun gefunden, daß die o.g. Nachteile nicht auftreten bei wasserlöslichen Holzschutzmitteln auf Basis von 2,5 bis 40 % (Gew.-%) Metallverbindungen, 10 bis 40 % diese Metalle fixierenden Sauren und 5 bis 50 % komplexbildenden, polymeren Stickstoffverbindungen und gegebenenfalls zusätzlichen wasserlöslichen Aminen und/oder Polyaminen.

Komplexbildende, polymere Stickstoffverbindungen sind z.B. Polyethylenimine, Polyamidoamine (Kondensationsprodukte von Polyaminen mit Adipinsäure), Kondensationsprodukte z.B. auf Basis Diethylentriamin/Trietthanolamin und/oder Diethanolamin/Diethylentriamin. Polyethylenimine werden bevorzugt.

Polyethylenimine (PEI) sind bekannt und entstehen durch Polymerisation von 1,2-Ethylenimin. In ihnen liegt der Stickstoff primär (Endgruppe), sekundär und tertiär (Verzweigung) vor. Geeignet sind Polyethylenimine mit n größer als 10; sehr gute Ergebnisse werden erzielt bei Verwendung von PEI mit einem Polymerisationsgrad n zwischen 50 und 1000.

Polyamidoamine entstehen beispielsweise durch Umsetzung von Diethylentriamin mit Adipinsäure bei 150 bis 200°C.

Weitere Kondensationsprodukte entstehen beispielsweise durch Erhitzen von Diethanolamin oder Triethanolamin auf 200 bis 220°C in Gegenwart von Phosphonsäure (H₃PO₃).

Metallverbindungen sind z.B. Kupfer-, Zink-, Nickel- oder Kobaltverbindungen oder ihre Mischungen. Sie können als wasserlösliche oder wasserunlösliche Verbindungen eingesetzt werden, z.B. Kupfer- und/oder Zinksalze wie Sulfate, Acetate, Hydroxide, Oxide, Borate, Fluoride, Kupferhydroxidcarbonat, Zinkcarbonat; es könnten auch die entsprechenden Nickel- und/oder Kobaltverbindungen verwendet werden. Kupferverbindungen werden bevorzugt.

Metallfixierende Säuren sind z.B. aliphatische C₅-C₂₀-Carbonsäuren wie Hexansäure, Heptansäure, Octansäure, verzweigte Carbonsäuren, 2-Ethyl-pentansäure, 2-Ethylhexansäure, 2-Ethylheptansäure, Isooctansäure, 150-nonansäure, stärker verzweigte Carbonsäuren wie Neocarbonsäuren, Versaticsäuren, Di-n-alkylessigsäure, Di-n-alkylpropionsäure, substituierte C₅-C₂₀-Carbonsäuren, z.B. Halogencarbonsäuren (2-Bromhexansäure, 2-Bromoctansäure) ; Ethercarbonsäuren, Aminocarbonsäuren; aliphatische Dicarbonsäuren, z.B. Sebacinsäure, Cycloalkylcarbonsäuren, wie z.B. Cyclohexancarbonsäure; Cycloarylcarbonsäuren; wie z.B. Phthalsäure; Salicylsäure, 3 oder 4-Hydroxy-benzoesäure; Aminohydroxycarbonsäure, wie z.B. Aminosalicylsäure; Polycarbonsäuren, wie z.B. Polyacrylsäuren und/oder andere metallfixierende Säuren, wie z.B. 2-Mercaptopyridin-N-oxid, 2-Hydroxypyridin-N-oxid; Dehydracetsäure, heterocyclische Carbonsäuren, z.B. Furancarbonsäure, 2,5-Dimethylfurancarbonsäure.

Es können auch die entsprechenden Alkali- und/oder Amin- und/oder Kupfer-, Zink-, Kobalt-, Nickelsalze der metallfixierenden Säuren zum Einsatz kommen.

Die Kupfer-, Zink-, Kobalt-, Nickelsalze der o.g. Säuren sind wasserunlöslich, sie werden durch die komplexbildenden polymeren Stickstoffverbindungen in wasserlösliche Verbindungen überführt.

Aus formulierungstechnischen und wirtschaftlichen Gründen ist es meist vorteilhaft, einen Teil der komplexbildenden, polymeren Stickstoffverbindungen durch wasserlösliche Amine und/oder Polyamine oder Ammoniak zu ersetzen. Verwendet werden können z.B. aliphatische lineare oder verzweigte Polyamine, wie z.B. Ethylendiamin, Diethylentriamin, Triethylentetramin, Aminoethylethanolamin, 1,2-Diaminopropan, 1,3-Diaminopropan, Dipropylentriamin, Tripropylentetramin, Neopentandiamin, N,N'-Bis(3-aminopropyl)ethylendiamin (N₄-Amin), wasserlösliche Amine, wie z.B. Alkanolamine wie Ethanolamin, Diethanolamin, Triethanolamin, Isopropanolamin; Polyetherdiamine, z.B. Verbindungen der allgemeinen Formel

H₂N (CH₂)ₙ O (CH₂ CH₂ O)ₘ (CH₂)ₙ NH₂

n; m = 1 - 6
und/oder Di- oder Polyamine von cyclischen Verbindungen, z.B. 1,3-Diaminocyclohexan, N-Aminoethylpiperazin.

Der Zusatz dieser wasserlöslichen Amine ist beispielsweise mengenmäßig so zu begrenzen, daß weder die Eindringung des Holzschutzmittels beeinträchtigt wird noch die Auswaschung der Metalle erhöht wird. Die polymeren, komplexbildenden Stickstoffverbindungen liegen dabei im Vergleich zu den Aminen mengenmäßig immer im überschuß vor.

Da ein breites Wirkungsspektrum gegen holzzerstörende tierische und pflanzliche Schädlinge meist erst bei höheren Einsatzmengen (mehr als 30 kg Holzschutzmittel je Kubikmeter Holz) erreicht wird, ist es beispielsweise vorteilhaft, die Wirkung der erfindungsgemäßen Holzschutzmittel durch den Zusatz weiterer Fungizide oder Insektizide zu ergänzen und zu verbessern.

Geeignet sind insbesondere Zusätze von z.B. N-Organodiazeniumdioxy-Verbindungen (HDO-Verbindungen), wie z.B. N-Cyclohexyl-, N-C₄-C₁₀-Alkyl-, insbesondere N-C₆-C₈-Alkyl-, N-Aryl-, insbesondere N-Phenyldiazeniumdioxy-Verbindungen und ihre Mischungen. Als Salze der N-Organodiazeniumdioxy-Verbindungen können beispielsweise sowohl die wasserlöslichen Alkali- und/oder Ammoniumsalze, als auch die wasserunlöslichen Metallsalze, wie z.B. die Kupfer-, Zink-, Nickel- und/oder Kobaltsalze verwendet werden.

Auch durch Mischung mit Fettaminen (primäre, sekundäre, tertiäre), die zumindest einen hydrophilen Rest mit wenigstens 6 C-Atomen enthalten, ist eine Verbesserung des Wirkungsspektrums gegen holzzerstörende und holzverfärbende Pilze sowie gegen holzzerstörende Insekten möglich.

Diese Amine entsprechen z.B. der allgemeinen Formel 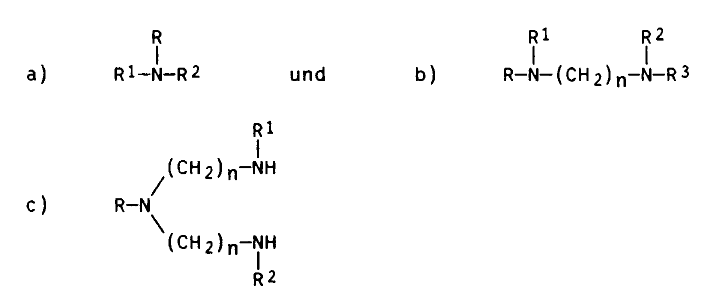
n = 1 bis 20
worin
- R: C₆-C₂₀-Alkyl und/oder Hydroxyalkyl,
- R¹,R²,R³: unabhängig voneinander Wasserstoff oder C₁- bis C₄-Alkyl oder einem dem Rest R entsprechenden C₆- bis C₃₀-Alkyl- oder Hydroxyalkyl- oder gegebenenfalls durch Halogen substituierten Benzylrest bedeutet.

Die Fettamine können entsprechend ihren Eigenschaften in Form ihrer Salze, z.B. ganz oder zum Teil als Salze von Carbonsäuren wie Essigsäure, Propionsäure, 2-Ethylhexansäure, gegebenenfalls unter Zusatz von Emulgatoren in die neuen Konzentrate oder Lösungen eingearbeitet werden.

Geeignete Fettamine sind z.B. Dimethyl-(C₁₀-C₁₈)-alkylamin, insbesondere Dimethyl-C₁₂/C₁₄-alkylamin, Methyldioctylamin, Methyldidecylamin, Octyldiethanolamin, Didodecyl-1,3-Propylendiamin, C₁₃/C₁₅-Alkyltrimethylendiamin, Laurylpropylendiamin, N,N-Bis(3-aminopropyl)-laurylamin.

Es können auch quaternäre Ammoniumverbindungen oder Phosphoniumverbindungen zugegeben werden.

Eine quaternäre Ammoniumverbindung ist z.B. eine Verbindung entsprechend der allgemeinen Formel R¹R²R³R⁴N+Z-, wobei
- R¹: einen Alkylrest mit 8 bis 20 Kohlenstoffatomen, insbesondere einen Alkylrest mit 12 bis 20 Kohlenstoffatomen oder einen Benzylrest bedeutet, der gegebenenfalls durch C₁- bis C₂₀-Alkyl oder Halogen substituiert ist,
- R²: C₁- bis C₆-Alkyl, C₃- bis C₉-Alkoxyalkyl, Polymeres Ethylenoxid (EO) oder Propylenoxid (PO) mit EO bzw. PO n = 2 bis 50,
- R³: C₁- bis C₆-Alkyl, C₃- bis C₄-Alkoxy, Polymeres Ethylenoxid (EO) oder Propylenoxid (PO) mit EO bzw. PO n = 2 bis 50,
- R⁴: C₁- bis C₂₀-Alkyl
bedeutet oder je zwei der Reste R¹ bis R⁴ zusammen mit dem Stickstoffatom einen heterocyclischen Rest bilden, der 4 bis 5 C-Atome, 1 bis 2 N-Atome und eine, zwei oder drei Doppelbindungen enthält, wobei die Kohlenstoffatome gegebenenfalls durch C₁- bis C₄-Alkyl oder Halogen substituiert sind und Z einen Säurerest z.B. Halogenid bedeutet.

Als wirksame Phosphoniumverbindungen eignen sich besonders Verbindungen der Formel

R¹₃R²P⁺Y⁻ ,

in der
- R¹: einen Alkylrest mit 1 bis 6 Kohlenstoffatomen, einen Hydroxyalkylrest mit 1 bis 6 Kohlenstoffatomen oder einen Phenylrest,
- R²: einen Alkylrest mit 8 bis 18 Kohlenstoffatomen und
- Y: einen Säurerest, insbesondere ein Halogenidanion,
bedeutet.

Die Reste R¹ und R² sind vorzugsweise geradkettig.

Die quaternären Phosphoniumverbindungen können in den neuen Konzentraten einzeln oder als Gemische vorhanden sein. Beispiele für derartige Phosphoniumverbindungen sind Trimethyl-n-dodecyl-phosphoniumchlorid, Triethyl-n-decylphosphoniumbromid, Tri-n-propyl-n-tetradecylphosphoniumchlorid, Trimethylol-n-hexadecylphosphoniumchlorid, Tri-n-butyl-n-tetradecylphosphoniumchlorid, Tri-n-butyl-n-dodecylphosphoniumbromid, Tri-n-butyl-n-decylphosphoniumchlorid, Tri-n-butyl-n-hexadecylphosphoniumbromid, Tri-n-hexyl-n-decylphosphoniumchlorid, Triphenyl-n-dodecylphosphoniumchlorid, Triphenyl-n-tetradecylphosphoniumbromid, Triphenyl-n-octadecylphosphoiumchlorid.

Auch ein Zusatz weiterer Fungizide, z.B. in emulgierter Form, wie
N-Tridecyl-2,6-dimethylmorpholin (Tridemorph) und/oder
4-(3-para-tertiär-butylphenyl)2-methyl-propyl-2,6-cis-dimethylmorpholin (Fenpropimorph) und/oder
Triazol- und/oder Imidazolverbindungen wie
1-(2-(2,4-Dichlorphenyl)-4-methyl-1,3-dioxolan-2-ylmethyl)-1H-1,2,4-triazol
1-(2-(2,4-Dichlorphenyl)-1,3-dioxolan-2-ylmethyl)-1H-1,2,4-triazol
1-(2-(2,4-Dichlorphenyl)-4-ethyl-1,3-dioxolan-2-ylmethyl)-1H-1,2,4-triazol
1-(2-(2,4-Dichlorphenyl)-4-propyl-1,3-dioxolan-2-ylmethyl)-1H-1,2,4-triazol (Propiconazol)
1-(2-(2,4-Dichlorphenyl)-4-pentyl-1,3-dioxolan-2-ylmethyl)-1H-1,2,4-triazol
1-(2-(2,4-Dichlorphenyl)-4-ethyl-1,3-dioxolan-2-ylmethyl)-1H-imidazol
α-tert-Butyl-α(p-Chlorphenylethyl)-1H-1,2,4-triazol-1-ethanol
1-(β-Alkyloxy-2,4-dichlorphenethyl)imidazol und/oder
Organozinnverbindungen, besonders Tributylzinn(TBT)verbindungen, wie z.B. TBT-oxid, TBT-versatoat, TBT-benzoat, TBT-naphthenat, TBT-HDO und/oder
Isothiazolinonverbindungen der folgenden Formel 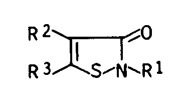
- R¹: ist Wasserstoff, ein Alkyl-, Alkenyl-, Alkinylrest mit 1 bis 18 Kohlenstoffatomen, Cycloalkylrest mit einem C₃- bis C₆-Ring und mit bis zu 12 Kohlenstoffatomen, einem Aralkyl- oder Arylrest mit bis zu 19 Kohlenstoffatomen
- R², R³: unabhängig voneinander Hydrogen-, Halogen- oder C₁- bis C₄-Alkylrest bzw. R² und R³ Teil eines Aromatenrestes
und/oder Hydroxamsäuren der allgemeinen Formel 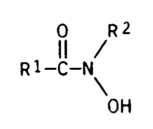
mit R¹ z.B. Cycloalkyl-, (Cyclohexyl-), Arylrest (Phenylrest) oder heterocyclischer Rest
R² z.B. Hydrogen-, C₁-C₄-Alkyl-, C₅-C₈-Cycloalkyl- oder Arylrest (Phenyl)
ist möglich.

Als Emulgatoren, gegebenenfalls unter Zusatz polarer Lösungsmittel, können vor allem die vorgenannten Fettamine und ihre Salze, quaternäre Ammonium-/Phosphoniumverbindungen und z.B. andere ionische und nichtionische Emulgatoren Verwendung finden.

Die Holzschutzmittel können gegebenenfalls weitere Verbindungen, z.B. Verbindungen mit einem fungiziden Anion, beispielsweise eine Borverbindung, z.B. Alkaliborat, Aminborat, Borsäure, Borsäurester; Fluoride z.B. Kaliumfluorid und/oder Salze der Fluoroborsäure und/oder Fluorophosphorsäure und/oder Difluorophosphorsäure enthalten.

Das Eindringen wäßriger Lösungen der neuen Holzschutzmittel ist bei einer Imprägnierung, z.B. im Kesseldruckverfahren sehr gut. Die Lösungen dringen gut ins Holz ein. Die Wirkstoffverteilung im Holz entspricht den Anforderungen der Praxis. Bei der Imprägnierung von Rundhölzern wird auch bei breitem Splintholz die äußere Grenze des Kernholzes erreicht. Erst nach der Imprägnierung beginnt die Ausfällung der Metallsalze, sie werden mit Hilfe der polymeren Stickstoffverbindungen an den Holzfasern und Holzinhaltsstoffen fixiert (aufgezogen).

Eine Fixierung der erfindungsgemäßen Holzschutzmittel ist bei ca. 20°C beispielsweise nach 1 bis 2 Wochen abgeschlossen, durch Heißdampffixierung (mehr als 100°C) oder Warmfixierung (50 bis 60°C im abgeschlossenen System) kann die Fixierungsreakton erheblich beschleunigt werden, sie ist dann nach 1 bis 2 Stunden bzw. 12 bis 24 Stunden abgeschlossen. Die Auswaschung wird gegenüber der Anwendung bekannter Holzschutzmittel verringert.

Der pH-Wert der wäßrigen Imprägnierlösungen liegt im allgemeinen zwischen pH 4 und pH 11, insbesondere zwischen pH 6 und 9.
Vor allem durch Einstellung von pH-Werten unter ca. pH 7,5 ist es möglich, auch Fungizide und Insektizide in die Konzentrate und Lösungen einzuarbeiten, die im alkalischen Bereich bei höheren pH-Werten nicht stabil sind. So können zur Vergrößerung des Wirkungsspektrums oder zur Erzielung besonderer Effekte, z.B. auch folgende Verbindungen, gegebenenfalls unter Verwendung von Hilfsmitteln wie ionischen oder nichtionischen Emulgatoren und/oder organischen Lösungsmitteln, zusätzlich verwendet werden:
Methylenbisthiocyanat
Chlorierte Phenole
Tetrachlorisophthalsäure-dinitril
N-Cyclohexyl-N-methoxy-2, 5-dimethyl-furan-3-carbonsäureamid
N-Dimethyl-N'-phenyl-(N-fluormethylthio)-sulfamid
N,N-Dimethyl-N'-toluyl-(N-fluormethylthio)-sulfamid
Benzimidazol-2-carbaminsäure-methylester
2-Thiocyanomethyl-thiobenzothiazol
2-Jodbenzoesäureanilid
1-(1',2',4'-Triazolyl-1')-(1-(4'-chlorphenoxy)-3,3-dimethylbutan-2-on
1-(1',2',4'-Triazolyl-1')-(1-(4'-chlorphenoxy)-3,3-dimethylbutan-2-ol
Hexachlorcyclohexan
O,O-Diethyl-dithio-phosphoryl-methyl-6-chlorbenoxazolon
2-(1,3-Thiazol-4-yl)-benzimidazol
N-Trichlormethylthio-3,6,7,8-tetrahydrophthalimid
N- (1,1,2,2-Tetrachlorethylthio)-3,6,7,8-tetrahydrophthalimid
N-Trichlormethylthiophthalimid
3-Jodo-2-propylbutylcarbamat
O,O-Dimethyl-S-(2-methylamino-2-oxoethyl)-dithiophosphat
O,O-Diethyl-O-(3,5,6-trichlor-2-pyridyl)-thiophosphat
O,O-Dimethyl-S-(N-phthalimido)-methyldithiophosphat
O, O-Diethyl-O-(α-cyanbenzyliden-amino)-thiophosphat
6,7,8,9,10-Hexachlor-1,5,5a,6,9,9a-hexahydro-6,9-methano-2,3,4-benzoedioxothiepien-3-oxid
(4-Ethoxyphenyl)-(dimethyl)-(3-(4-fluoro-3-phenoxy-phenyl)-propyl-silane
2-sek. -Butyl-phenyl-N-methylcarbamat
2-i-Propoxyphenyl-N-methyl-carbamat
N-Methyl-1-napththyl-carbamat
Norbonen-dimethanohexa-chlorcyclosulfit
1-(4-Chlorphenyl)-3-)2,6-di-fluorbenzoyl)-harnstoff
synthetische Pyrethroide, wie
(+)-3-(2,2-Dichlorvinyl-2,2-dimethyl)-cyclopropan-1-carbonsäure-3-phenoxybenzylester
3-(2,2-Dichlorvinyl-2,2-dimethyl)-cyclopropan-1-carbonsäure-α-Cyano-3,3-phenocybenzylester
3-(2,2-Dibromvinyl-2,2-dimethyl)-α-cyano-m-phenoxybenzyl-1R,3R)-cyclopropancarboxylat (Deltamethrin)
α-Cyano-3-phenoxybenzyl-isopropyl-2, 4-chlorphenylacetat.

Die wasserverdünnbaren Holzschutzmittel enthalten - in konzentrierter Form - das Kupfer und/oder Zink und/oder Nickel und/oder Kobalt, berechnet als Metall, im allgemeinen z.B. in einer Menge von 1,0 bis 12,5 Gew.-%.

Geeignete Konzentrate bestehen z.B. aus: ( Gew.-%)
2,5 - 40 % Kupfer- und/oder Zink- und/oder Kobalt- und/oder Nickelverbindungen
10 - 40 % einer die Metalle fixierenden Säure
5 - 50 % einer komplexbildenden, polymeren Stickstoffverbindung, insbesondere Polyethylenimine
0 - 25 % eines wasserlöslichen Amins und/oder Polyamins
0 - 40 % Verbindung mit einem fungizid wirkenden Anion
0 - 25 % N-Organodiazeniumdioxyverbindungen
0 - 40 % eines Fettamins und/oder Fettaminsalzes oder deren Mischungen
0 - 50 % einer quaternären Ammonium- und/oder quaternären Phosphoniumverbindung
0 - 20 % Tridemorph, Fenpropimorph, Triazol- und/oder Imidazolderivate, Tributylzinnverbindungen und/oder Isothiazolonverbindungen und/oder Hydroxamsäuren
0 - 2 % Synthetische Pyrethroide
wobei die Summe jeweils 100 Gew% ergibt, sowie gegebenenfalls untergeordnete Mengen an anderen Bestandteilen, wie Ammoniak, Korrosionsinhibitoren, komplexbildenden Säuren (z.B. Nitrilotriessigsäure, Ethylendiamintetraessigsäure bei Verwendung von Wasser mit höheren Härtegraden) und erforderlichenfalls Wasser und/oder polare wassermischbare Lösungsmittel, deren Anteile jedoch im allgemeinen gering gehalten werden können und die im wesentlichen der Handhabung dienen.

Die Erfindung erstreckt sich jedoch gleichermaßen auf die durch Verdünnung mit Wasser herstellbaren Imprägnierlösungen entsprechend geringerer Einzelkonzentration. Die Anwendungskonzentration beträgt z.B. 0,01 bis 1,50 Gew.% Metall, z.B. Kupfer, in der wäßrigen Imprägnierlösung, je nach Art der Imprägnierung und des Gefährdungsgrades des zu imprägnierenden Holzes.

Durch Auflösen der Metallsalze, gegebenenfalls unter Wärmezufuhr, insbesondere der Kupfer- und/oder Zinkverbindungen, in den polymeren, komplexbildenden Stickstoffverbindungen, gegebenenfalls unter Amin- und Wasserzusatz, entstehen hochkonzentrierte wasserlösliche Pasten und flüssige Konzentrate, die nach dem Verdünnen mit Wasser zum Imprägnieren von Holz verwendet werden können.

Die Anwendung der Imprägnierlösungen zum Schutz von Holz kann durch handwerkliche Verfahren, wie z.B. Sprühen, Streichen, Tauchen, Trogtränken, oder durch großtechnische Verfahren, wie z.B. Kesseldruckverfahren, Wechseldruckverfahren, Doppelvakuumverfahren, erfolgen. Unter ''Holz'' sind sowohl massives Holz als auch Holzwerkstoffe, z.B. Spanplatten, Sperrholz, zu verstehen; hier kann gegebenenfalls das Holzschutzmittel auch im Leimuntermischverfahren eingebracht werden.

Die Konzentrate oder Lösungen können durch wasserlösliche oder in Wasser emulgierbare Farbstoffe und/oder Pigmentpräparationen eingefärbt werden. Eine Zugabe von Wachs-, Paraffin- und/oder Acrylatdispersionen zur Erzielung einer wasserabweisenden Wirkung oder Verbesserung der Fixierung ist möglich.

Die Konzentrate können gegebenenfalls auch in bindemittelenthaltende wasserverdünnbare Systeme (Grundierungen, Lasuren) eingearbeitet werden.

Die Erfindung wird an folgenden Beispielen erläutert:

### Beispiel A: (nicht erfindungsgemäß)

20 % Aminoethylethanolamin
25 % 2-Ethylhexansäure
6 % N-Cyclohexyldiazeniumdioxy-Kalium (K-HDO) (Im folgenden abgekürzt als KHDO bezeichnet)
39 % Wasser
10 % Kupferhydroxidcarbonat; Cu(OH)₂·Cu CO₃
Das Konzentrat wird mit Wasser im Verhältnis 2 Teile Konzentrat und 98 Teile Wasser verdünnt, d.h. die Anwendungskonzentration beträgt 2 %.

Es wurden jeweils 20 Kiefernsplintholzklötzchen (15 x 25 x 50 mm) imprägniert und je 10
I nach 4 Wochen Fixierung bei Normaltemperatur (20°C)
II nach Heißdampfbehandlung (1h, 100°C) und 4 Stunden Abkühlzeit mehrmals mit Wasser ausgewaschen, das Waschwasser gesammelt und der Kupfergehalt im Waschwasser bestimmt.

Bei der Heißdampfbehandlung wurde zusätzlich die Menge des Kupfers im Kondensatwasser (an der Oberfläche der Klötzchen kondensierter Heißdampf) analysiert, zu dem Kupfergehalt des Waschwasser addiert und daraus die Gesamtauswaschung berechnet.

Die Menge des ausgewaschenen Kupfers wurde auf die Gesamtmenge des Kupfers im Holz vor der Auswaschung berechnet (keine Auswaschung = 0 %, vollständige Auswaschung = 100 %).

### Kupferauswaschung

I 26 %
II
   a) 9 % (Auswaschung durch das Kondensatwasser)
   b) 21 % (Auswaschung nach Heißdampfbehandlung)
II Summe: 30 %

### Beispiel B (nicht erfindungsgemäß)

15,0 % Diethylentriamin
25,0 % 2-Ethylhexansäure
6,5 % KHDO
43,5 % Wasser
10,0 % Kupferhydroxycarbonat Cu(OH)₂·Cu CO₃
Anwendungskonzentration: 2 %

### Kupferauswaschung

I 31 %
II
   a) 11 %
   b) 21 %
      Summe: 32 %

### Beispiel C (nicht erfindungsgemäß)

20 % Diethylentriamin
33 % 2-Ethylhexansäure
34,5 % Wasser
12,5 % Kupferhydroxydcarbonat
Anwendungskonzentration: 2 %

### Kupferauswaschung

I 41,5 %

### Beispiel D (nicht erfindungsgemäß)

17,5 % Dipropylentriamin
25,0 % 2-Ethylhexansäure
6,0 % K-HDO
41,5 % Wasser
10 % Kupferhydroxycarbonat
Anwendungskonzentration: 2 %

### Kupferauswaschung

I 21 %
II
   a) 6 %
   b) 19 %
      Summe: 25 %

Für die Bestimmung der Eindringtiefe wurden 5 Kiefernpalisaden (1,50 m Länge; Durchmesser 0,20 m aus gleichem Wuchsgebiet; mit im lufttrockenen Zustand verhältnismäßig engen Jahresringen und einer mittleren Splintbreite über 3 cm) in jeweils 6 Rundholzabschnitte von 24 cm Länge aufgeschnitten und die Schnitt-flächen mit Epoxidharzanstrichen abgedichtet. Aus jeder Palisade wurde je 1 Abschnitt entnommen, so daß 5 Kiefernrundholzabschnitte gleichzeitig imprägniert werden konnten (1 h Vakuum: weniger als 0,1 bar; 4 h Druck: 8 bar).

Die Kiefernrundholzabschnitte wurden für die Bestimmung der Eindringtiefe des Kupfers nach der Imprägnierung in der Mitte aufgeschnitten, die Schnittflächen mit 4-(Pyridil-(2)-azo)Resorcinmonatriumsalz(monohydrat) behandelt (Rotfärbung mit Kupfer und Zink) und die Eindringtiefe des Kupfers bestimmt.

### Kupfereindringung (Serie I/1)

| | | a | b | c | d | e |
|---|---|---|---|---|---|---|
| mittlere Splintbreite (mm) | ca. | 35 | 33 | 38 | 30 | 42 |
| mittlere Cu-Eindringung (mm) | ca. | 25 | 19 | 27 | 15 | 18 |

### Beispiel E (nicht erfindungsgemäß)

15,0 % 1,3-Diaminopropan
25,0 % 2-Ethylhexansäure
6,0 % K-HDO
44,0 % Wasser
10,0 % Kupferhydroxycarbonat Cu(OH)₂·Cu CO₃
Anwendungskonzentration: 2 %

### Kupferauswaschung

I 18 %
II
   a) 5 %
   b) 19 %
      Summe: 24 %

### Kupfereindringung (Serie I/2)

| | | a | b | c | d | e |
|---|---|---|---|---|---|---|
| mittlere Splintbreite (mm) | ca. | 35 | 32 | 37 | 31 | 42 |
| mittlere Cu-Eindringung (mm) | ca. | 22 | 19 | 26 | 15 | 19 |

### Beispiele erfindungsgemäß

### Beispiel 1

15 % PEI ca. n = 150
9 % Aminoethylethanolamin
23,5 % 2-Ethylhexansäure
6,0 % K-HDO
36,5 % Wasser
10,0 % Kupferhydroxycarbonat
Anwendungskonzentration: 2 %

### Kupferauswaschung

I 6,5 %
II
   a) 5,5 %
   b) 8,0 %
      Summe: 13,5 %

### Kupfereindringung (Serie I/3)

| | | a | b | c | d | e |
|---|---|---|---|---|---|---|
| mittlere Splintbreite (mm) | ca. | 35 | 31 | 38 | 31 | 41 |
| mittlere Cu-Eindringung (mm): | Die gesamte Splintbreite wird erfaßt; die Kerngrenze ist erreicht. | | | | | |

### Beispiel 2

15 % PEI ca. n = 150
6 % Diethylentriamin
22 % Isooctansäure
6 % K-HDO
41 % Wasser
10 % Kupferhydroxycarbonat
Anwendungskonzentration: 2 %

### Kupferauswaschung

I 7,5 %
II
   a) 5,0 %
   b) 8,5 %
      Summe: 13,5 %

### Kupfereindringung (Serie I/4)

| | | a | b | c | d | e |
|---|---|---|---|---|---|---|
| mittlere Splintbreite (mm) | ca. | 37 | 34 | 36 | 33 | 40 |
| mittlere Cu-Eindringung (mm) | Die gesamte Splintbreite wird erfaßt, die Kerngrenze ist erreicht. | | | | | |

### Beispiel 3

14,5 % PEI ca. n = 100
8,0 % Aminoethylethanolamin
25,0 % 2-Ethylhexansäure
6,5 % K-HDO
36,0 % Wasser
10,0 % Kupferhydroxycarbonat
Anwendungskonzentration: 2 %

### Kupferauswaschung

I 9,0 %
II
   a) 7,0 %
   b) 5,5 %
      Summe: 12,5 %
III Nach Fixierung 12 Stunden bei 60°C in abgeschlossenem System 10,5 %

### Kupfereindringung (Serie I/5)

| | | a | b | c | d | e |
|---|---|---|---|---|---|---|
| mittlere Splintbreite (mm) | ca. | 34 | 31 | 33 | 34 | 39 |
| mittlere Cu-Eindringung (mm) | Die gesamte Splintbreite wird erfaßt, die Kerngrenze ist erreicht. | | | | | |

### Beispiel 4

14,5 % PEI ca. n = 100
9,0 % Aminoethylethanolamin
23,5 % Isooctansäure
36,5 % Wasser
6,5 % K-HDO
10,0 % Kupferhydroxycarbonat
Anwendungskonzentration: 2 %

### Kuperauswaschung

I 7,0 %
II
   a) 5,0 %
   b) 7,5 %
      Summe: 12,5 %

### Kupfereindringung (Serie I/6)

| | | a | b | c | d | e |
|---|---|---|---|---|---|---|
| mittlere Splintbreite (mm) | ca. | 36 | 32 | 36 | 33 | 49 |
| mittlere Cu-Eindringung (mm) | Die gesamte Splintbreite wird erfaßt, die Kerngrenze ist erreicht. | | | | | |

### Beispiel 5

14,5 % PEI ca. n = 100
9,0 % Aminoethylethanolamin
23,5 % Cyclohexancarbonsäure
6,0 % K-HDO
37,0 % Wasser
10,0 % Kupferhydroxycarbonat
Anwendungskonzentration: 2 %

### Kupferauswaschung

I 10,0 %
II
   a) 4,5 %
   b) 6,5 %
      Summe: 11,0 %
III 9,8 %

### Kupfereindringung (Serie II/1)

| | | a | b | c | d | e |
|---|---|---|---|---|---|---|
| mittlere Splintbreite (mm) | ca. | 47 | 30 | 31 | 35 | 42 |
| mittlere Cu-Eindringung (mm) | Die gesamte Splintbreite wird erfaßt, die Kerngrenze ist erreicht. | | | | | |

### Beispiel 6

15 % PEI ca. n = 150
5,0 % Aminoethylethanolamin
5,5 % Diethylentriamin
15 % Sebacinsäure
5 % Isononansäure
6,0 % K-HDO
38,5 % H₂O
10,0 % Kupferhydroxycarbonat
Anwendungskonzentration: 2 %

### Kupferauswaschung

I 9,0 %
II
   a) 5,0 %
   b) 7,0 %
      Summe: 12,0 %

### Kupfereindringung (Serie II/2)

| | | a | b | c | d | e |
|---|---|---|---|---|---|---|
| mittlere Splintbreite (mm) | ca. | 46 | 31 | 30 | 36 | 44 |
| mittlere Cu-Eindringung (mm) | Die gesamte Splintbreite wird erfaßt, die Kerngrenze ist erreicht. | | | | | |

### Beispiel 7

14,5 % PEI ca. n = 500
9,0 % Aminoethylethanolamin
21,0 % 2-Ethylhexansäure
4,0 % Phthalsäureanhydrid
6,0 % K-HDO
35,5 % Wasser
10,0 % Kupferhydroxycarbonat
Anwendungskonzentration: 2 %

### Kupferauswaschung

I 6,5 %
II
   a) 4,0 %
   b) 5,5 %
      Summe: 9,5 %

### Kupfereindringung Serie II/3

| | | a | b | c | d | e |
|---|---|---|---|---|---|---|
| mittlere Splintbreite (mm) | ca. | 46 | 31 | 33 | 36 | 41 |
| mittlere ca.-Eindringung (mm) | Die gesamte Splintbreite wird erfaßt, die Kerngrenze ist erreicht. | | | | | |

### Beispiel 8

14,5 % PEI ca. n = 100
9,0 % Aminoethylethanolamin
22,5 % Octansäure
6,0 % K-HDO
38,0 % Wasser
10,0 % Kupferhydroxycarbonat
Anwendungskonzentration: 2 %

### Kupferauswaschung

I 7,0 %
II
   a) 5,0 %
   b) 7,5%
      Summe: 12,5 %

### Kupfereindringung (Serie II/4)

| | | a | b | c | d | e |
|---|---|---|---|---|---|---|
| mittlere Splintbreite (mm) | ca. | 45 | 32 | 32 | 34 | 41 |
| mittlere Cu-Eindringung (mm) | Die gesamte Splintbreite wird erfaßt, die Kerngrenze ist erreicht. | | | | | |

### Beispiel 9

14,5 % PEI ca. n = 150
9,0 % Aminoethylethanolamin
27,0 % C₁₀-Versaticsäure
6,0 % K-HDO
33,5 % Wasser
10,0 % Kupferhydroxycarbonat
Anwendungskonzentration: 2 %

### Kupferauswaschung

I 6,5 %
II
   a) 4,5 %
   b) 7,5 % Summe: 12,0 %
III 9,8 %

### Kupfereindringung Serie II/5

| | | a | b | c | d | e |
|---|---|---|---|---|---|---|
| mittlere Splintbreite (mm) | ca. | 48 | 33 | 32 | 34 | 43 |
| mittlere Cu-Eindringung (mm) | Die gesamte Splintbreite wird erfaßt, die Kerngrenze ist erreicht. | | | | | |

### Beispiel 10

15,0 % PEI ca. n = 150
8,0 % Aminoethylethanolamin
23,5 % Salicylsäure
6,0 % K-HDO
37,5 % Wasser
10,0 % Kupferhydroxycarbonat
Anwendungskonzentration: 2 %

### Kupferauswaschung

I 7,5 %
II
   a) 4,0 %
   b) 8,0 %
      Summe: 12,0 %
III 9,5 %

### Kupfereindringung Serie II/6

| | | a | b | c | d | e |
|---|---|---|---|---|---|---|
| mittlere Splintbreite (mm) | ca. | 47 | 32 | 31 | 35 | 42 |
| mittlere Cu-Eindringung (mm) | Die gesamte Splintbreite wird erfaßt, die Kerngrenze ist erreicht. | | | | | |

### Beispiel 11

14,5 % PEI ca. n = 150
8,0 % Aminoethylethanolamin
26,0 % 2-Ethylhexansäure
6,5 % K-HDO
37,6 % Wasser
7,4 % Zinkoxyd
Anwendungskonzentration: 2 %

### Zinkauswaschung

I 10,0 %

### Zinkeindringung (Serie II/1)

| | | a | b |
|---|---|---|---|
| mittlere Splintbreite (mm) | ca. | 37 | 31 |
| mittlere Zn-Eindringung (mm) | Die gesamte Splintbreite wird erfaßt, die Kerngrenze ist erreicht. | | |

### Beispiel 12

15,0 % PEI ca. n = 150
9,0 % Aminoethylethanolamin
23,5 % Isononansäure
32,0 % Wasser
4,0 % Borsäure
6,5 % K-HDO
10,0 % Kupferhydroxycarbonat
Anwendungskonzentration: 2 %

### Kupferauswaschung

I 7,5 %
II
   a) 6,0 %
   b) 8,0 %
      Summe: 14,0 %

### Beispiel 13

17,5 % PEI ca. n = 150
5,0 % Dipropylentriamin
26,0 % 2-Ethylhexansäure
21,5 % Wasser
10,0 % Kupferhydroxycarbonat
4,0 % Propiconazol
12,0 % nichtionischer Emulgator (ethoxyliertes Nonylphenol, etwa 9 Ethylenoxid je Phenol)
4,0 % Propylenglykol
Anwendungskonzentration: 1,5 %

### Kupferauswaschung

I 6,5 %
II
   a) 4,0 %
   b) 6,0 %
      Summe: 10,0 %

### Kupfereindringung

| | | a | b |
|---|---|---|---|
| mittlere Splintbreite (mm) | ca. | 37 | 40 |
| mittlere Cu-Eindringung (mm) | Die gesamte Splintbreite wird erfaßt, die Kerngrenze ist erreicht. | | |

### Beispiel 14

17,5 % PEI ca. n = 500
5,0 % Dipropylentriamin
20,0 % Sorbinsäure
27,5 % Wasser
10,0 % Kupferhydroxycarbonat
4,0 % Propiconazol
12,0 % nichtionischer Emulgator
4,0 % Propylenglykol
Anwendungskonzentration: 1,5 %

### Kupferauswaschung

I 8,5 %

### Beispiel 15

17,5 % PEI ca. n = 150
5,0 % Dipropylentriamin
18,0 % Sebacinsäure
29,5 % Wasser
10,0 % Kupferhydroxycarbonat
4,0 % Propiconazol
12,0 % nichtionischer Emulgator
4,0 % Propylenglykol
Anwendungskonzentration: 1,5 %

### Kupferauswaschung

I 5,3 %
II
   a) 3,2 %
   b) 4,6 %
      Summe: 7,8 %

### Beispiel 16

14,5 % PEI ca. n = 150
4,2 % Dipropylentriamin
22,5 % Isononansäure
27,0 % Benzalkoniumchlorid (C₁₂-C₁₄) (N-C₁₂-C₁₄-alkyl, N-benzyl, N,N-dimethylammoniumchlorid)
8,3 % Kupferhydroxycarbonat
23,5 % Wasser
Anwendungskonzentration: 2 %

### Kupferauswaschung

I 10,0 %

### Kupfereindringung

| | | a | b |
|---|---|---|---|
| mittlere Splintbreite (mm) | ca. | 32 | 41 |
| mittlere Kupfer-Eindringung (mm) | Die gesamte Splintbreite wird erfaßt, die Kerngrenze ist erreicht. | | |

### Beispiel 17

8,0 % PEI ca, n = 150
13,5 % Isononansäure
8,5 % Dipropylentriamin
25,0 % Borsäure
16,0 % Benzalkoniumchlorid
24,0 % Wasser
5,0 % Kupferhydroxycarbonat
Anwendungskonzentration: 2 %

### Kupferauswaschung

I 10,0 %
II
   a) 4,0 %
   b) 6,0 %
      Summe: 10,0 %

### Kupfereindringung

| | | a | b |
|---|---|---|---|
| mittlere Splintbreite (mm) | ca. | 42 | 31 |
| mittlere Cu-Eindringung (mm) | Die gesamte Splintbreite wird erfaßt, die Kerngrenze ist erreicht. | | |

### Beispiel 18

8,0 % PEI ca, n = 150
5,0 % Dipropylentriamin
26,0 % 2-Ethylhexansäure
21,5 % Wasser
10,0 % Kupferhydroxycarbonat
3,0 % TBT-Benzoat
14,0 % nichtionischer Emulgator
3,0 % Propylenglykol
Anwendungskonzentration: 2 %

### Kupferauswaschung

I 7,5 %
II
   a) 5,0 %
   b) 6,5 %
      Summe: 11,5 %

### Kupfereindringung

| | | a | b |
|---|---|---|---|
| mittlere Splintbreite (mm) | ca. | 31 | 34 |
| mittlere Cu-Eindringung (mm) | Die gesamte Splintbreite wird erfaßt, die Kerngrenze ist erreicht. | | |

### Beispiel 19

14,5 % PEI ca. n = 150
8,0 % Aminoethylethanolamin
25,0 % 2-Ethylhexansäure
10,0 % Benzisothiazolon Na-Salz
32,5 % Wasser
10,0 % Kupferhydroxycarbonat
Anwendungskonzentration: 2 %

### Kupferauswaschung

I 6,5 %
II
   a) 5,0 %
   b) 3,0 %
      Summe: 8,0 %

### Beispiel 20

15,0 % PEI ca. n = 500
8,0 % Aminoethylethanolamin
22,0 % 2-Ethylhexansäure
6,0 % 2-Mercaptopyridin-N-oxid
39,0 % Wasser
10,0 % Kupferhydroxycarbonat
Anwendungskonzentration: 2 %

### Kupferauswaschung

I 9,5 %
II
   a) 6,5 %
   b) 5,5 %
      Summe: 12,0 %

### Beispiel 21

15,0 % PEI ca. n = 150
9,0 % Aminoethylethanolamin
20,0 % 2-Ethylhexansäure
10,0 % 2-Hydroxypyridin-N-oxid
36,0 % Wasser
10,0 % Kupferhydroxycarbonat
Anwendungskonzentration: 2 %

### Kupferauswaschung

I 8,5 %
II
   a) 5,0 %
   b) 7,5 %
      Summe: 12,5 %

### Beispiel 22

14,5 % PEI ca. n = 500
10,0 % Aminoethylethanolamin
20,0 % 2-Hydroxypyrodin-N-oxid
6,0 % K-HDO
29,5 % Wasser
10,0 % Kupferhydroxycarbonat
Anwendungskonzentration: 2 %

### Kupferauswaschung

I 9,0 %
II
   a) 7,0 %
   b) 5,5 %
      Summe: 12,5 %

### Beispiel 23

14,5 % PEI ca. n = 500
21,5 % Isooctansäure
7,5 % Kupferhydroxid
35,0 % Benzalkoniumchlorid (C₁₂/C₁₄)
21,5 % Wasser
Anwendungskonzentration: 2 %

### Kupferauswaschung

I 10,5 %
II
   a) 6,5 %
   b) 7,0 %
      Summe: 13,5 %

### Kupfereindringung

| | a | b |
|---|---|---|
| mittlere Splintbreite (mm) | 33 | 37 |
| mittlere Cu-Eindringung (mm) | Die gesamte Splintbreite wird erfaßt, die Kerngrenze ist erreicht. | |

### Beispiel 24

13,50 % PEI ca. n = 500
25,75 % 2-Ethylhexansäure
7,00 % Kupferhydroxid
11,50 % Dimethylalkylamin (C₁₂/C₁₄) (N-C₁₂-C₁₄-alkyl, N,N-dimethylamin)
7,50 % Tridemorph
9,75 % ethoxiliertes Coxosfettamin (Dichte 0,96 g/cm³ bei 50°C)
25,00 % Wasser
Anwendungskonzentration: 2 %

### Kupferauswaschung

I 5,5 %
II
   a) 3,5 %
   b) 3,5 %
      Summe: 7,0 %

### Beispiel 25

11,75 % PEI ca. n = 130
3,25 % Dipropylentriamin
22,33 % 2-Ethylhexansäure
29,33 % Wasser
6,67 % Kupferhydroxycarbonat
10,00 % Dimethylalkylamin (C₁₂/C₁₄)
6,67 % Tridemorph
10,00 % ethoxiliertes Cocosfettamin (Dichte 0,96 g/cm³ bei 50°C)
Anwendungskonzentration: 1,5 %

### Kupferauswaschung

I 7,0 %
II
   a) 5,0 %
   b) 4,0 %
      Summe: 9,0 %

### Kupfereindringung

| | | a | b |
|---|---|---|---|
| mittlere Splintbreite (mm) | ca. | 36 | 30 |
| mittlere Cu-Eindringung (mm) | Die gesamte Splintbreite wird erfaßt, die Kerngrenze ist erreicht. | | |

### Beispiel 26

14,50 % PEI ca. n = 150
8,00 % Aminoethylethanolamin
25,50 % 2-Ethylhexansäure
4,50 % K-HDO
37,35 % Wasser
10,00 % Kupferhydroxycarbonat
0,15 % Deltamethrin

### Kupferauswaschung

I 6,5 %
II
   a) 3,5 %
   b) 4,0 %
      Summe: 8,5 %

### Beispiel 27

27,00 % PEI ca. n = 500
33,00 % 2-Ethylhexansäure
28,75 % Wasser
11,25 % Kupferhydroxid
Anwendungskonzentration: 2 %

### Kupferauswaschung

I 11,0 %
II
   a) 6,0 %
   b) 6,5 %
      Summe: 12,5 %

### Kupfereindringung

| | | a | b |
|---|---|---|---|
| mittlere Splintbreite (mm) | ca. | 36 | 32 |
| mittlere Cu-Eindringung (mm) | Die gesamte Splintbreite wird erfaßt, die Kerngrenze ist erreicht. | | |

### Beispiel 28

14,5 % PEI ca. n = 500
7,0 % Aminoethylethanolamin
26,0 % 2-Ethylhexansäure
4,0 % N-Cyclohexyl-2,5-Dimethylfuran-3-hydroxamsäure, Natriumsalz
38,5 % Wasser
10,0 % Kupferhydroxycarbonat
Anwendungskonzentration: 2 %

### Kupferauswaschung

I 8,5 %
II
   a) 5,0 %
   b) 5,0 %
      Summe: 10,0 %

## Patentansprüche

1. Wasserlösliches Holzschutzmittel, enthaltend 2,5 bis 40 % (Gew.-%) einer Metallverbindung, 10 bis 40 % einer Metalle fixierenden Säure, dadurch gekennzeichnet, daß es zusätzlich 5 bis 50 % einer komplexbildenden polymeren Stickstoffverbindung enthält.

2. Mittel nach Anspruch 1, enthaltend eine Kupferverbindung.

3. Mittel nach Anspruch 1, enthaltend Polyethylenimin mit n größer als 10.

4. Mittel nach Anspruch 1, enthaltend 2-Ethylhexansäure.

5. Verfahren zum Schutz von Holz, dadurch gekennzeichnet, daß man Holz mit einer wirksamen Menge eines Mittels gemäß Anspruch 1 behandelt.

6. Verfahren zum Schutz von Holz, dadurch gekennzeichnet, daß man Holz mit einer wirksamen Menge einer Mischung aus Wasser und einem Mittel gemäß Anspruch 1 behandelt.

7. Mittel gemäß Anspruch 1, enthaltend zusätzlich ein wasserlösliches Amin.

8. Verwendung einer wirksamen Menge eines Mittels gemäß Anspruch 1 zum Schutz von Holz.

9. Verwendung einer wirksamen Menge einer Mischung aus Wasser und einem Mittel gemäß Anspruch 1 zum Schutz von Holz.

10. Mischung aus Wasser und einer wirksamen Menge eines Mittels gemäß Anspruch 1.

## Claims

1. A water-soluble wood preservative composition, containing from 2.5 to 40% (% by weight) of a metal compound and from 10 to 40% of a metal-fixing acid, characterized in that it additionally contains from 5 to 50% of a complexing polymeric nitrogen compound.

2. A composition as claimed in claim 1, containing a copper compound.

3. A composition as claimed in claim 1, containing polyethyleneimine with n greater than 10.

4. A composition as claimed in claim 1, containing 2-ethylhexanoic acid.

5. A process for protecting wood, which comprises treating wood with an effective amount of a composition as claimed in claim 1.

6. A process for protecting wood, which comprises treating wood with an effective amount of a mixture of water and a composition as claimed in claim 1.

7. A composition as claimed in claim 1, containing in addition a water-soluble amine.

8. The use of an effective amount of a composition as claimed in claim 1 for protecting wood.

9. The use of an effective amount of a mixture of water and a composition as claimed in claim 1 for protecting wood.

10. A mixture of water and an effective amount of a composition as claimed in claim 1.

## Revendications

1. Moyen de protection du bois, soluble dans de l'eau, contenant 2,5 à 40 % (% en poids) d'un composé métallique, 10 à 40 % d'un acide fixant les métaux, caractérisé par le fait qu'il contient additionnellement 5 à 50 % d'un composé azoté polymère complexant.

2. Moyen selon la revendication 1, contenant un composé du cuivre.

3. Moyen selon la revendication 1, contenant une polyéthylénimine de n supérieur à 10.

4. Moyen selon la revendication 1, contenant de l'acide 2-éthylhéxanique.

5. Procédé de protection du bois, caractérisé par le fait qu'on traite le bois avec une quantité efficace d'un moyen selon la revendication 1.

6. Procédé de protection du bois, caractérisé par le fait qu'on traite le bois avec une quantité efficace d'un mélange d'eau et d'un moyen selon la revendication 1.

7. Moyen selon la revendication 1, contenant, en outre, une amine soluble dans l'eau.

8. Utilisation d'une quantité efficace d'un moyen selon la revendication 1 pour la protection du bois.

9. Utilisation d'une quantité efficace d'un mélange d'eau et d'un moyen selon la revendication 1 pour la protection du bois.

10. Mélange d'eau et d'une quantité efficace d'un moyen selon la revendication 1.
